# EUROPÄISCHE PATENTSCHRIFT

(11) **EP 2 580 501 B1**
(45) Veröffentlichungstag und Bekanntmachung des Hinweises auf die Patenterteilung: **09.04.2014**
(21) Anmeldenummer: 12726359.8
(22) Anmeldetag: 30.05.2012
(51) Int. Cl.: F16K 11/16, F16K 11/048, F16K 11/18, F16K 11/044

(54) **UMSTELLVENTIL**
DIVERTER VALVE
SOUPAPE D'INVERSION

(30) Priorität: 31.05.2011 DE 202011101289 U
(43) Veröffentlichungstag der Anmeldung: 17.04.2013
(73) Patentinhaber: Neoperl GmbH, 79379 Müllheim (DE)
(72) Erfinder: FANGMEIER, Martin, 79424 Auggen (DE)
(74) Vertreter: Börjes-Pestalozza, Heinrich
(86) Internationale Anmeldenummer: PCT/EP2012/002285
(87) Internationale Veröffentlichungsnummer: WO 2012/163523

(56) Entgegenhaltungen:
- EP-A2- 0 701 075
- DE-A1- 1 750 092
- DE-B- 1 253 430
- US-A- 2 969 045
- US-A- 3 779 280

## Beschreibung

Die Erfindung betrifft ein Umstellventil, mit dem sich verschiedene Ausgänge des Umstellventils wahlweise dessen Eingang zuordnen lassen.

Umstellventile sind auch im Sanitärbereich bereits in verschiedenen Ausführungen bekannt, um das aus dem Leitungsnetz entnommene Wasser wahlweise entweder zu einem Badewannenauslauf oder zu einem Brausekopf zu führen. Auch hat man bereits als 4/3-Wegeventile ausgestaltete Umstellventile geschaffen, die drei Ausgänge haben, von denen ein erster Ausgang mit einer Handbrause und ein zweiter Ausgang mit einem feststehenden Duschkopf verbunden ist, während ein dritter Ausgang an einer Badewannen-Füllarmatur angeschlossen werden kann.

Bei den vorbekannten 4/3-Wegeventilen kann einer der drei Ausgänge meist mit Hilfe einer rotatorischen oder translatorischen Umstellbewegung aufgeschaltet werden. Soll in bestimmten Betriebszuständen ein Ausgang den Vorrang haben, so wird dies in den allgemeinen Bereichen der Technik durch hydraulische, pneumatische oder elektromechanische Aktoren bewerkstelligt. Da aber in der Sanitärbranche meist die Funktionen "Selbsthaltung" und "Vorrangstellung" verwendet werden und hydraulische, pneumatische oder elektromechanische Aktoren eher unüblich sind, werden hier entweder einfache Zug- oder Druck-Umsteller verwendet, die bloß zwei vorwählbare Ausgänge haben. Sind in der Sanitärbranche demgegenüber ausnahmsweise drei Ausgänge erforderlich, werden meist rotatorisch bediente Umsteller verwendet, die regelmäßig keine automatische Rückstellung in eine Vorrangstellung aufweisen.

Es besteht daher insbesondere die Aufgabe, ein handbetätigbares Umstellventil zu schaffen, das über eine Vorrangstellung hinaus auf zwei weitere Fluidwege umschaltbar ist, wobei selbst bei einem vergleichsweise geringen Betriebsdruck eine Selbsthaltung in dem vorgewählten Fluidweg erfolgt und nach Ausschalten des Durchflusses stets eine automatische Rückstellung in die Vorrangstellung sichergestellt sein soll. Ein Ventil dieser Art ist aus der Druckschrift DE 1253430 bereits bekannt.

Die erfindungsgemäße Lösung dieser Aufgabe besteht in den Merkmalen des geltenden Anspruchs 1.

Das erfindungsgemäße Umstellventil hat ein Ventilgehäuse, das einen Eingang und drei Ausgänge hat, und das somit als 4/3-Wegeventil ausgestaltet ist. Um den Fluidweg im Umstellventil auf einen der Ausgänge auszurichten, ist der jeweils gewählte Ausgang mittels einer im Ventilgehäuse verschieblich geführten Umstellachse dem einen Eingang zuordenbar. Auf der Umstellachse sind dazu zwei Dichtelemente zwischen zwei Mitnehmern verschieblich geführt und mit Hilfe wenigstens eines Druckelementes auf Abstand voneinander gehalten.

Das erfindungsgemäße Umstellventil weist ein Schaltrohr auf, das über zwei, an seinem Rohrumfang vorgesehene umlaufende Führungsringflächen im Ventilgehäuse verschieblich geführt ist und zumindest eine, zwischen den Führungsringflächen vorgesehene Schaltrohröffnung hat. Beidseits dieser zumindest einen, radial angeordneten Schaltrohröffnung können Ringdichtungen angeordnet sein, die vorzugsweise im Bereich der Führungsringflächen vorgesehen sind oder diese Führungsringflächen bilden. Über die zumindest eine, radial angeordnete Schaltrohröffnung hinaus weist das Schaltrohr beidseits axial angeordnete Umfangsstirnränder auf, welche die offenen Stirnseiten des Schaltrohres umgrenzen. Bei dem erfindungsgemäßen Umstellventil ist eine axiale Stellbewegung der Umstellachse derart zumindest auf eines der beiden Dichtelemente übertragbar, dass entweder beide Dichtelemente mit außenliegenden umlaufenden Dichtflächen an, einen Fluiddurchlass umgrenzenden Gegendichtflächen des Ventilgehäuses anliegen und eines der Dichtelemente mit einer innenliegenden umlaufenden Dichtfläche den benachbarten Umfangsstirnrand des Schaltrohres verschließt, während das andere Dichtelement mit Abstand von dem als Fluiddurchlass dienenden anderen Umfangsstirnrand des Schaltrohres verbleibt oder aber beide innenliegenden umlaufenden Dichtflächen der Dichtelemente an den benachbarten Umfangsrändern des Schaltrohres anliegen, während das eine Dichtelement mit seiner außenliegenden umlaufenden Dichtfläche die benachbarte, den einen Fluiddurchlass umgrenzenden Gegendichtfläche beaufschlagt und das andere Dichtelement von der ihm zugeordneten, einen Fluiddurchlass umgrenzenden Gegendichtfläche beabstandet ist.

Liegen die an den Dichtelementen innenliegend vorgesehenen umlaufenden Dichtflächen an den benachbarten Umfangsrändern des Schaltrohres an, während gleichzeitig das eine Dichtelement mit seiner außenliegenden umlaufenden Dichtfläche die benachbarte, den einen Fluiddurchlass umgrenzenden Gegendichtfläche beaufschlagt und das andere Dichtelement von der ihm zugeordneten, einen Fluiddurchlass umgrenzenden Gegendichtfläche beabstandet ist, kann das Fluid rechts oder links am Schaltrohr vorbei durch den zwischen ihm und dem Ventilgehäuse verbleibenden Ringspalt hindurch zu einem der Ausgänge geleitet werden. Dabei wird das zwischen den Dichtelementen vorgesehene Druckelement derart komprimiert, dass nur das eine Dichtelement mit seiner außenliegenden umlaufenden Dichtfläche die benachbarte, den einen Fluiddurchlass umgrenzenden Gegendichtfläche beaufschlagt, während das andere Dichtelement von der ihm zugeordneten, einen Fluiddurchlass umgrenzenden Gegendichtfläche beabstandet ist. Durch den Innendruck des über diesen Strömungsweg durch das Ventilgehäuse durchfließenden Fluids wird das vorgenannte Dichtelement gegen das Druckelement gepresst, das dadurch im Sinne einer Selbsthaltung in dem komprimierten Zustand verbleibt. Wird die Zufuhr des Fluids unterbrochen und herrscht im Gehäuseinneren des Fluidgehäuses wieder ein atmosphärischer Innendruck vor, kann sich das Druckelement in seine Ausgangsstellung zurückbewegen und das eine Dichtelement auf der Umstellachse automatisch derart in Richtung zum zugeordneten Fluiddurchlass verschieben, dass dieses Dichtelement den Umfangsstirnrand des Schaltrohres freigibt und sich mit seinem außenliegenden Dichtrand an die den Fluiddurchlass umgrenzende Gegendichtfläche anlegt.

Damit ist nun in dieser Vorrangstellung ein Strömungsweg aufgeschaltet, der durch den in entspanntem Zustand des Druckelementes freigelegten Umfangsstirnrand des Schaltrohres und die wenigstens eine Schaltrohröffnung hindurch zu einem anderen Ausgang führt. Das erfindungsgemäße Umstellventil, das auch handbetätigbar sein kann, ist somit über eine Vorrangstellung hinaus auf zwei weitere Fluidwege umschaltbar, wobei selbst bei einem vergleichsweise geringen Betriebsdruck eine Selbsthaltung in dem vorgewählten Fluidweg erfolgt und nach Ausschalten des Durchflusses stets eine automatische Rückstellung in die Vorrangstellung sicher gestellt wird.

Um die verschiedenen Ein- und Ausgänge außenseitig am Ventilgehäuse anordnen zu können, ist es vorteilhaft, wenn einer ersten Auslassöffnung in Richtung des zu ihr führenden Strömungsweges ein erster axialer Fluiddurchlass vorgeschaltet ist und wenn die anderen Öffnungen am Gehäuseumfang des Ventilgehäuses vorgesehen sind.

Eine bevorzugte Weiterbildung gemäß der Erfindung sieht vor, dass der zweite axiale Fluiddurchlass einer am Gehäuseumfang vorgesehenen und in einer quer zur Umstellachse angeordneten Ebene befindlichen Auslassöffnung in Richtung des zu ihr führenden Strömungsweges vorgeschaltet ist.

Eine bevorzugte Ausführungsform gemäß der Erfindung sieht vor, dass die zumindest eine Schaltrohröffnung des Schaltrohres einer dritten Auslassöffnung in Richtung des zu ihr führenden Strömungsweges vorgeschaltet ist.

Um das erfindungsgemäße Umstellventil möglichst einfach manuell betätigen zu können, ist es zweckmäßig, wenn zumindest das eine Achsende der Umstellachse durch einen Gehäusedurchlass hindurch nach außen vorsteht und als eine vorzugsweise zur manuellen Betätigung bestimmte Handhabe ausgestaltet ist.

Während die Dichtelemente reibungsarm auf der Umstellachse verschieblich geführt sein sollten, können die Mitnehmer demgegenüber reibschlüssig auf der Umstellachse gehalten sein. Bevorzugt wird jedoch eine Ausführungsform, bei der zumindest ein Mitnehmer zumindest in axialer Richtung unverrückbar mit der Umstellachse verbunden ist.

Um das Umstellventil auch während einer durchlaufenden Fluidströmung manuell leicht von dem einen Strömungsweg zum anderen Strömungsweg schalten zu können, ist es vorteilhaft, wenn zumindest ein Dichtelement mit dem benachbarten Mitnehmer lösbar verbindbar ist.

Dabei sieht eine bevorzugte Weiterbildung gemäß der Erfindung vor, dass zumindest ein Dichtelement auf seiner, dem benachbarten Mitnehmer zugewandten Stirnseite eine Aufnahme zur saugnapfartigen Verbindung und/oder mechanischen Verrastung zumindest mit einem benachbarten Teilbereich des Mitnehmers aufweist.

Eine besonders einfache und leicht herstellbare Ausführungsform, die auch den konstruktiven Aufwand bei dem erfindungsgemäßen Umstellventil erleichtert, sieht vor, dass das wenigstens eine Druckelement als Federwendel ausgestaltet ist, welche die Umstellachse verschiebbar umgreift.

Um nach Absperren eines vorgeschalteten Sperrventils die automatische Rückstellung des erfindungsgemäßen Umstellventils in eine Vorrangstellung zu begünstigen, ist es vorteilhaft, wenn das wenigstens eine Druckelement bei atmosphärischem Innendruck im Ventilgehäuse ein Dichtelement von einer am Umfangsstirnrand des Schaltrohres anliegenden Stellposition in eine am benachbarten axialen Fluiddurchlass anliegenden Ausgangsposition bewegt, derart, dass während des nachfolgenden Entnahmevorganges das Fluid durch die dadurch freigelegte Stirnöffnung des Schaltrohres hindurch in das Schaltrohr einfließen und von dort aus diesem durch dessen zumindest eine radiale Schaltrohröffnung ausströmen kann.

Weiterbildungen gemäß der Erfindung ergeben sich aus den Ansprüchen in Verbindung mit der Beschreibung und den Figuren. Nachstehend wird die Erfindung anhand eines bevorzugten Ausführungsbeispieles noch näher erläutert.

Es zeigt:
- Fig.1:: ein als 4/3-Wegeventil ausgestaltetes Umstellventil, bei dem der Strömungsweg mit Hilfe einer, in einem Ventilgehäuse verschieblich geführten Umstellachse von einem Eingang zu einem von drei Ausgängen wählbar ist, in einer auseinandergezogenen Einzelteildarstellung,
- Fig. 2:: das Umstellventil aus Fig. 1 in einem Längsschnitt gezeigt ist,
- Fig. 3:: das Umstellventil aus den Fig. 1 und 2, in einer in Längsrichtung teilgeschnittenen Seitenansicht,
- Fig. 4:: das Umstellventil aus Fig. 1 bis 3 in einer perspektivischen Seitenansicht,
- Fig. 5:: das während eines ersten Strömungsweges gezeigte und hier in einem Armaturengehäuse montierte Umstellventil aus den Fig. 1 bis 4 in einem Längsschnitt,
- Fig. 6:: das nach Absperren des Fluiddurchflusses in einen als Vorrangstellung definierten dritten Strömungsweg sich automatisch zurückstellende Umstellventil aus den Fig. 1 bis 5 in einem Längsschnitt,
- Fig. 7:: das während eines zweiten Strömungsweges gezeigte Umstellventil aus den Fig. 1 bis 6 in einem Längsschnitt,
- Fig. 8:: das nach Absperren des Fluiddurchflusses erneut in einen der Vorrangstellung entsprechenden vierten Strömungsweg sich automatisch zurückstellende Umstellventil aus den Fig. 1 bis 7 in einem Längsschnitt,
- Fig. 9:: das Umstellventil aus den Fig. 1 bis 8 in einem Detail-Längsschnitt im Bereich eines auf der Umstellachse bis zu einem Mitnehmer geführten Dichtelementes,
- Fig. 10:: das Umstellventil aus den Fig. 1 bis 9 in einem Detail-Längsschnitt im Bereich des mit dem ihm zugeordneten Mitnehmer verbundenen Dichtelementes, und
- Fig. 11:: das Umstellventil aus den Fig. 1 bis 10 in einem Detail-Längsschnitt im Bereich des dem zugeordneten Mitnehmer angenäherten Dichtelementes.

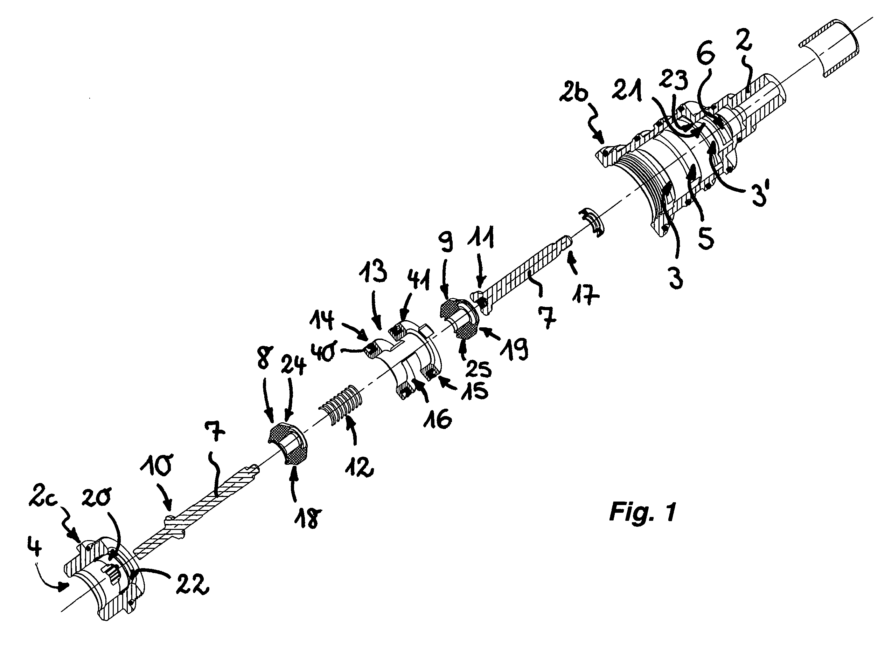

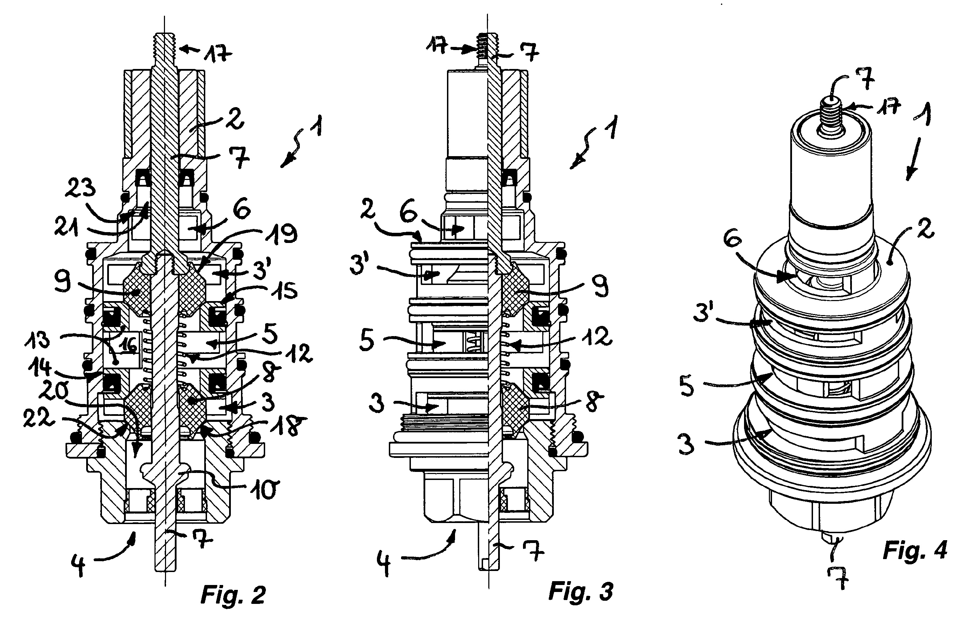

Die Fig. 1 bis 11 zeigen ein Umstellventil 1, das als 4/3-Wegeventil ausgestaltet ist. Während der Eingang des Umstellventils 1 beispielsweise mit einem Wasserzulauf verbunden ist, führen die Ausgänge des Umstellventils 1 wahlweise entweder zu einer Badewannen-Auslaufarmatur, einer flexiblen Handbrause oder aber beispielsweise zu einem feststehenden Brausekopf.

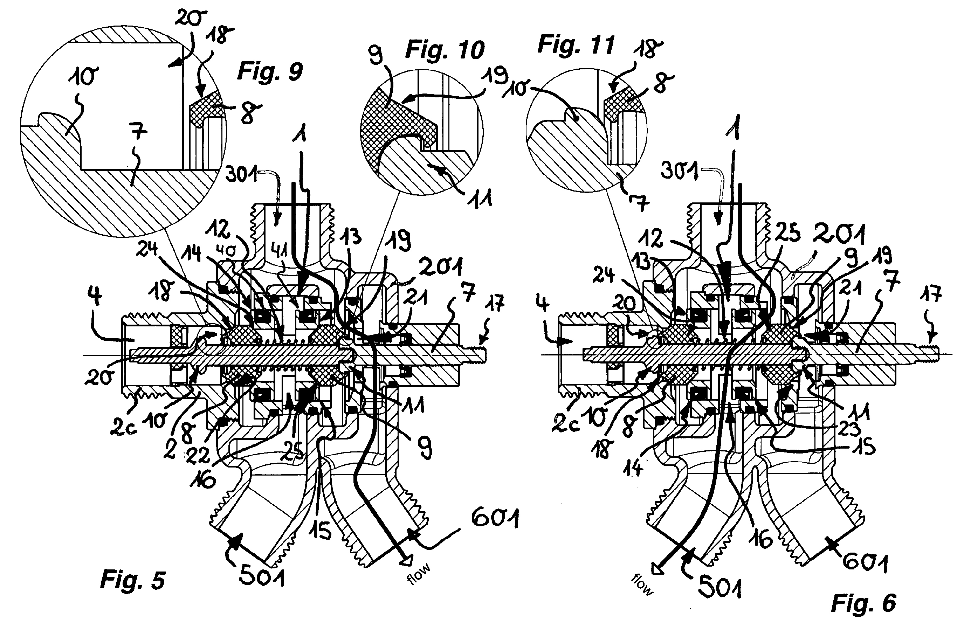

Das Umstellventil 1 hat ein in den Fig. 1 bis 4 näher dargestelltes Ventilgehäuse 2, das zwei als Eingang dienende Einlassöffnungen 3, 3' und drei, als Ausgänge bestimmte Auslassöffnungen 4, 5 und 6 hat. Das Ventilgehäuse 2 kann ein- oder mehrteilig ausgebildet sein; das Ventilgehäuse 2 ist hier zweiteilig ausgestaltet und weist eine in ein Armaturengehäuse 201 (vgl. Fig. 5 bis 8) einsetzbare Einsetzkartusche 2b sowie ein als stirnseitiger Abschluss des Armaturengehäuses 201 dienendes Gewindeanschlussstück 2c auf (vgl. Fig. 1 bis 4). Von den drei Auslassöffnungen 4, 5, 6 ist wahlweise jeweils eine Auslassöffnung mittels einer im Ventilgehäuse 2 verschieblich geführten Umstellachse 7 den Einlassöffnungen 3, 3' zuordenbar. Auf der Umstellachse 7 sind zwei Dichtelemente 8, 9 zwischen zwei Mitnehmern 10, 11 verschieblich geführt und mit Hilfe wenigstens eines Druckelementes 12 auf Abstand von einander gehalten. Im Ventilgehäuse 2 ist ein Schaltrohr 13 vorgesehen, das über zwei, an seinem Rohrumfang vorgesehene umlaufende Führungsringflächen 14, 15 im Ventilgehäuse 2 verschieblich geführt ist und zumindest eine zwischen den Führungsringflächen 14, 15 angeordnete Schaltrohröffnung 16 hat. Beidseits dieser zumindest einen, radial angeordneten Schaltrohröffnung 16 sind Ringdichtungen vorgesehen, die hier als Lippendichtungen 40, 41 ausgebildet sind.

Um den Strömungsweg im Umstellventil 1 manuell verstellen und auf einen der Ausgänge ausrichten zu können, steht das eine Achsende der Umstellachse 7 durch einen Gehäusedurchlass hindurch nach außen vor und ist dort mit einem Außengewinde 17 zum Aufschrauben einer beispielsweise als Betätigungsknopf ausgestalteten Handhabe ausgebildet.

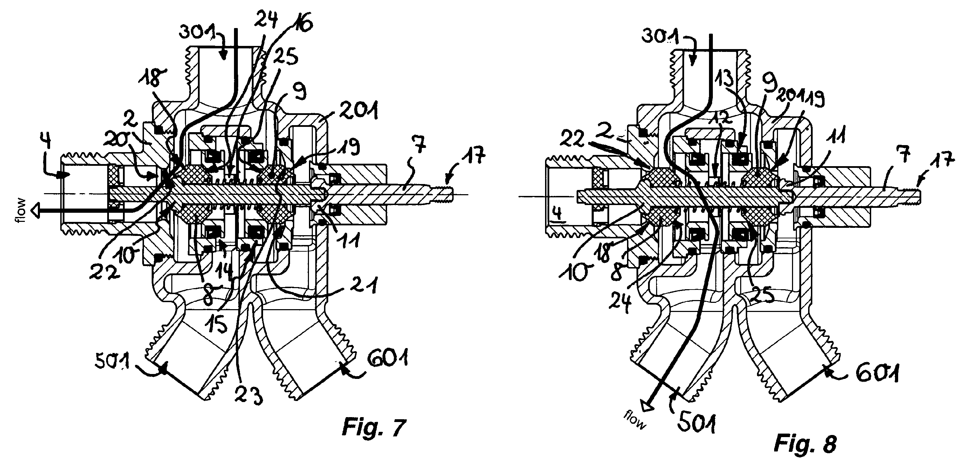

Eine axiale Stellbewegung der Umstellachse 7 ist derart zumindest auf eines der beiden Dichtelemente 8, 9 übertragbar, dass entweder beide Dichtelemente 8, 9 mit außenliegenden umlaufenden Dichtflächen 18, 19 an, einen Fluiddurchlass 20, 21 umgrenzenden Gegendichtflächen 22, 23 des Ventilgehäuses 2 anliegen und eines der Dichtelemente 8, 9 mit einer innenliegenden umlaufenden Dichtfläche 24 oder 25 den benachbarten Umfangsstirnrand des Schaltrohres 13 verschließt, während das andere Dichtelement 9, 8 mit Abstand von dem als Fluiddurchlass dienenden anderen Umfangsstirnrand des Schaltrohres 13 verbleibt (vgl.. Fig. 6, 8), oder aber beide innenliegenden umlaufenden Dichtflächen 24, 25 der Dichtelemente 8, 9 an den benachbarten Umfangsrändern des Schaltrohres 13 anliegen, während das eine Dichtelement 8 oder 9 mit seiner außenliegenden umlaufenden Dichtfläche 18 oder 19 die benachbarte, den einen Fluiddurchlass 20 oder 21 umgrenzenden Gegendichtfläche 22 beziehungsweise 23 beaufschlagt und das andere Dichtelement 9 oder 8 von der ihm zugeordneten, einen Fluiddurchlass 21 oder 20 umgrenzenden Gegendichtfläche 23 beziehungsweise 22 beabstandet ist (vgl. Fig. 5,7).

Um den Fluidweg im Umstellventil 1 auf einen der Auslassöffnungen 4, 5, 6 auszurichten, ist die jeweils gewählte Auslassöffnung mittels der im Ventilgehäuse 2 verschieblich geführten Umstellachse 7 den Einlassöffnungen 3, 3' zuordenbar. Auf der Umstellachse 7 sind die Dichtelemente 8, 9 zwischen den Mitnehmern 10 ,11 verschieblich geführt und mit Hilfe des hier als Wendel-Druckfeder ausgebildeten Druckelementes 12 auf Abstand voneinander gehalten. Im Ventilgehäuse 2 des Umstellventils 1 ist das Schaltrohr 13 über zwei, an seinem Rohrumfang vorgesehene umlaufende Führungsringflächen 14, 15 verschieblich geführt. Das Schaltrohr 13 hat die zumindest eine, zwischen den Führungsringflächen 14, 15 angeordnete Schaltrohröffnung 16.

Liegen die an den Dichtelementen 8, 9 innenliegend vorgesehenen umlaufenden Dichtflächen 24, 25 an den benachbarten Umfangsrändern des Schaltrohres 13 an (vgl. Fig. 5, 7), während gleichzeitig das eine Dichtelement 8 oder 9 mit seiner außenliegenden umlaufenden Dichtfläche 18 oder 19 die benachbarte, den einen Fluiddurchlass 20 oder 21 umgrenzenden Gegendichtfläche 22 beziehungsweise 23 beaufschlagt und das andere Dichtelement 9 oder 8 von der ihm zugeordneten, einen Fluiddurchlass 21 oder 20 umgrenzenden Gegendichtfläche 23 beziehungsweise 22 beabstandet ist, kann das Fluid rechts oder links am Schaltrohr 13 vorbei durch den zwischen ihm und dem Ventilgehäuse 2 verbleibenden Ringspalt hindurch zu einem der Auslassöffnungen 4 oder 6 geleitet werden. Dabei wird das zwischen den Dichtelementen 8, 9 vorgesehene Druckelement 12 komprimiert, dass nur das eine Dichtelement 8, 9 mit seiner außenliegenden umlaufenden Dichtfläche 18, 19 die benachbarte, den einen Fluiddurchlass 20 oder 21 umgrenzende Gegendichtfläche 22 oder 23 beaufschlagt, während das andere Dichtelement 9, 8 von der ihm zugeordneten, einen Fluiddurchlass 20, 21 umgrenzenden Gegendichtfläche 23, 22 beabstandet ist (vgl. Fig. 5, 7). Durch den Innendruck des über diese Strömungswege durch das Ventilgehäuse 2 durchfließenden Fluids wird das vorgenannte Dichtelement 8 oder 9 gegen das Druckelement 12 gepresst, das dadurch im Sinne einer Selbsthaltung in dem komprimierten Zustand verbleibt. Wird die Zufuhr des Fluids unterbrochen und herrscht im Gehäuseinneren des Fluidgehäuses 2 wieder ein atmosphärischer Innendruck vor, kann sich das Druckelement 12 in seine Ausgangsstellung zurückbewegen und das eine Dichtelement 8, 9 auf der Umstellachse 7 automatisch derart in Richtung zum zugeordneten Fluiddurchlass 20 oder 21 verschieben, dass dieses Dichtelement 8, 9 den Umfangsstirnrand des Schaltrohres 13 freigibt und sich mit seinem außenliegenden Dichtrand 18, 19 an die den Fluiddurchlass 20 oder 21 umgrenzende Gegendichtfläche 22 oder 23 anlegt (vgl. Fig. 6, 8). Damit ist nun in dieser Vorrangstellung ein Strömungsweg aufgeschaltet, der durch den in entspanntem Zustand des Druckelementes 12 freigelegten Umfangsstirnrand des Schaltrohres 13 und die wenigstens eine Schaltrohröffnung 16 hindurch zu einem anderen Ausgang 5 führt.

Während das Umstellventil 1 in den in Fig. 5 und 7 gezeigten Ventilstellungen selbst bei geringem Betriebsdruck in einer Selbsthaltung verharrt, wird bei Abschalten des Durchflusses an einem dem Umstellventil 1 vorgeschalteten Sperrventil eine Rückstellung in die in Fig. 6 und 8 gezeigte Vorrangstellung bewirkt. Das hier dargestellte Umstellventil 1 ist vorzugsweise mit einer Wannenfüllarmatur verwendbar, an die zwei verschiedene Brausen angeschlossen werden können. Während beispielsweise der in Fig. 7 gezeigte Strömungsweg zu einer festinstallierten Kopfbrause führen kann, kann der in Fig. 5 aufgeschaltete Ausgang 6 über einen flexiblen Schlauch mit einer Handbrause verbunden sein. Die Umschaltbewegung erfolgt dabei manuell durch eine translatorische Bewegung mittels Drücken und Ziehen an der Umstellachse 7 aus der in den Fig. 5 und 7 gezeigten Mittelstellung heraus. Wird der Durchfluss der Armatur abgestellt, schaltet das Umstellventil 1 automatisch in die in Fig. 6 und 8 gezeigten Vorrangstellungen zurück. Diese automatische Rückstellfunktion unterstützt die Sicherheit vor einem Rücksaugen potenziell kontaminierten Brauchwassers über die Handbrause in das Leitungsnetz und ist in weiten Teilen der Welt Standard.

Bis zu einem Druck von beispielsweise 2,5 bar vor dem Umstellventil 1 kann dieses aus den in Fig. 5 oder 7 gezeigten Ventilstellungen heraus auch wieder manuell in die in den Fig. 6 und 8 gezeigte Vorrangstellung zurückgestellt werden, ohne dass das vorgeschaltete Armaturenventil geschlossen werden müsste.

Die Dichtelemente 8, 9, welche im Ventilgehäuse 2 die durch die Gegendichtflächen 22, 23 umgrenzten Fluiddurchlässe 20, 21 verschließen können, sind vorzugsweise axial dichtend ausgeführt und auf der Umstellachse 7 axial beweglich angeordnet.

Die beiden Dichtelemente 8, 9, die auf der Umstellachse 7 axial beweglich angeordnet und dazu reibungsarm ausgestaltet sind, und die die beidseitig stirnseitigen Fluiddurchlässe des Schaltrohres 13 verschließen können, sind vorzugsweise axial dichtend ausgeführt. Das zentrale Schaltrohr 13, welches an seinen beiden Stirnenden jeweils eine zentrische Passage als Fluiddurchlass und mittig die radial angeordnete Schaltrohröffnung 16 für den Fluidaustritt hat, ist axial zwischen den beiden oben genannten, den Fluidstrom abdichtenden Dichtelementen 8, 9 beweglich. Bei dieser axialen Beweglichkeit ist die als radialer Austritt dienende Schaltrohröffnung 16 immer in Überschneidung mit der ebenfalls radial verlaufenden Auslassöffnung 5 des Umstellventils 1 verbunden.

Die im Ventilgehäuse 2 axial verschieblich geführte Umstellachse 7 trägt die Mitnehmer 10, 11, die zur Verschiebung der Dichtelemente 8, 9 bestimmt sind. Diese Dichtelemente 8, 9 werden durch das hier als Druck-Federwendel 12 ausgebildete federelastische Element auseinandergedrückt, wodurch bei Abstellen des Durchflusses einer der stirnseitigen Fluiddurchlässe des Schaltrohres 13 offen steht und die Auslassöffnung 5 aufgeschaltet wird, während die Auslassöffnungen 4 und 6 verschlossen sind.

Alle die Auslassöffnungen 4, 5 und 6 voneinander dichtend trennenden Dichtelemente 8, 9 sind reibungsarm ausgeführt, um eine Handbetätigung des Umstellventils 1 zu vereinfachen. Dabei ist in den Fig. 9 bis 11 angedeutet, dass durch eine saugnapfartige Ausgestaltung der den Mitnehmern 10, 11 zugeordneten Stirnseite der Dichtelemente 8, 9 auch bei Durchfluss und somit entgegen dem selbsthaltend wirkenden Innendruck eine axiale Bewegung der Dichtelemente 8, 9 stattfinden kann. Hierzu müssen diese Mitnehmer 10, 11 mit der Umstellachse 7 radial dichtend oder - wie hier - vorzugsweise einstückig verbunden sein.

Durch Drücken der Umstellachse 7 nimmt der Mitnehmer 11 das zugeordnete Dichtelement 9 mit und drückt es dichtend gegen den benachbarten axialen Fluiddurchlass stirnseitig am Schaltrohr 13, welches Schaltrohr 13 dadurch wiederum mit dem gegenüberliegenden axialen Fluiddurchlass gegen das Dichtelement 8 dichtend gepresst wird, welches Dichtelement 8 wiederum die Auslassöffnung 4 auf seiner anderen Stirnseite abdichtet (vgl. Fig. 5). Der Strömungsweg von der Einlassöffnung 3 zu der Auslassöffnung 6 ist somit die einzige mögliche Passage für das Fluid, während die Auslassöffnungen 4 und 5 durch den statischen Innendruck entgegen der Federkraft des Druckelementes 12 verschlossen gehalten werden.

Wird der Durchfluss nun abgestellt, herrscht atmosphärischer Innendruck und das Druckelement 12 schiebt das Dichtelement 9 axial zurück auf den Fluiddurchlass 21, womit die benachbarte stirnseitige Fluidpassage des Schaltrohres 13 geöffnet wird um beim nächsten Ausschalten eines Durchflusses das Fluid wieder der als Vorrangsstellung definierten Auslassöffnung 5 zugeordnet ist (vgl. Fig. 6).

Durch Ziehen der Umstellachse 7 nimmt der Mitnehmer das zugeordnete Dichtelement 8 mit und drückt es dichtend gegen den zugeordneten benachbarten Fluiddurchlass des Schaltrohres 13, welches wiederum mit dem gegenüberliegenden axialen Fluiddurchlass am innenliegenden Dichtrand 25 des Dichtelementes 9 dichtet, das mit seinem außenliegenden Dichtrand 19 wiederum den Fluiddurchlass 21 des Ventilgehäuses 2 abdichtet (vgl. Fig. 7).

Die Auslassöffnung 4 ist somit die einzige mögliche Passage für das Fluid, während die Auslassöffnungen 5 und 6 durch den statischen Innendruck entgegen der Federkraft verschlossen gehalten bleiben.

Wird der Durchfluss nun erneut abgestellt, herrscht atmosphärischer Innendruck und das Druckelement 12 schiebt das dem Fluiddurchlass 20 zugeordnete Dichtelement 8 axial zurück in Richtung zur Auslassöffnung 4, womit die benachbarte stirnseitige Fluidpassage des Schaltrohres 13 geöffnet wird und beim nächsten Aufschalten eines Durchflusses das Fluid wieder über die Auslassöffnung 5 ausfließen kann (vgl. Fig. 8).

Befindet sich die Umstellachse 7 während eines Fluiddurchflusses in den in Fig. 5 und 7 gezeigten Stellungen, ist der jeweilige Mitnehmer 10, 11 im zugeordneten Dichtelement 8, 9 lösbar gehalten und vorzugsweise saugnapfartig verrastet. Betätigt man nun die Umstellachse 7 händisch wieder zu den in Fig. 6 oder 8 gezeigten Positionen, so ermöglicht diese lösbare und insbesondere saugnapfartige Verbindung der Mitnehmer 10, 11 mit den Dichtelementen 8, 9 das Überwinden des selbsthaltend wirkenden Innendruckes und das Fluid kann wieder aus der Auslassöffnung 5 ausfließen. Die lösbare Verbindung der Mitnehmer 10, 11 sowie der Dichtelemente 8, 9 kann auch als mechanisch verrastete, z.B. verschnappende Bauart ausgeführt werden, in dem diese Funktion nicht mittels gummielastischem, sondern zum Beispiel thermoplastischem Werkstoff ausgeführt wird, wodurch sich der zu überwindende, selbsthaltend wirkende Innendruck steigern lässt. Da aber gleichzeitig das Einrasten der Mitnehmer 10, 11 in den Dichtelementen 8, 9 erschwert wird, muss für diese Funktion zumindest in einfacher Bauart ein Kompromiss zwischen leichtgängigem Einrasten und überwindbarem Innendruck gefunden werden.

In den Fig. 5 bis 8 wird deutlich, dass das Umstellventil 1 in ein Armaturengehäuse 201 einsetzbar und darin montierbar ist. Das Ventilgehäuse 2 ist dazu in eine Einsetzöffnung des Armaturengehäuses 201 einsetzbar, bis ein hier am Gewindeanschlussstück 2c vorgesehenes Außengewinde an einem Innengewinde greift, welches an der die Einsetzöffnung des Armaturengehäuses 201 umgrenzenden Innenumfangswandung vorgesehen ist. Im montierten Zustand sind die Einlassöffnungen 3, 3' des Ventilgehäuses 2 mit dem Eingang 301 des Armaturengehäuses 201 und die Auslassöffnungen 5, 6 mit den ihnen zugeordneten Ausgängen 501 bzw. 601 verbunden, während die Auslassöffnung 4 von außen erreichbar bleibt.

## Patentansprüche

1. Umstellventil (1) mit einem Ventilgehäuse (2), das mindestens eine Einlassöffnung (3, 3') und wenigstens drei Auslassöffnungen (4, 5, 6) hat, von denen (4, 5, 6) mittels einer im Ventilgehäuse (2) verschieblich geführten Umstellachse (7) wahlweise jeweils eine Auslassöffnung der wenigstens einen Einlassöffnung (3, 3') zuordnenbar ist, mit zwei Dichtelementen (8, 9), die (8, 9) auf der Umstellachse (7) zwischen zwei Mitnehmern (10, 11) verschieblich geführt und mithilfe wenigstens eines Druckelementes (12) auf Abstand voneinander gehalten sind, mit einem Schaltrohr (13) das über zwei an seinem Rohrumfang vorgesehene umlaufende Führungsringflächen (14, 15) im Ventilgehäuse (2) verschieblich geführt ist und zumindest eine zwischen den Führungsringflächen (14, 15) vorgesehene radiale Schaltrohröffnung (16) hat, **dadurch gekennzeichnet, dass** eine axiale Stellbewegung der Umstellachse (7) derart zumindest auf eines der beiden Dichtelemente (8, 9) übertragbar ist, dass entweder beide Dichtelemente (8, 9) mit außenliegenden umlaufenden Dichtflächen (18 ,19) an, einen Fluiddurchlass (20, 21) umgrenzenden Gegendichtflächen (22, 23) des Ventilgehäuses (2) anliegen und eines der Dichtelemente (8, 9) mit einer innenliegenden umlaufenden Dichtfläche (24, 25) den benachbarten Umfangsstirnrand des Schaltrohres (13) verschließt, während das andere Dichtelement (9, 8) mit Abstand von dem als Fluiddurchlass dienenden anderen Umfangsstirnrand des Schaltrohres (13) verbleibt oder aber beide innenliegenden umlaufenden Dichtflächen (24, 25) der Dichtelemente (8, 9) an den benachbarten Umfangsrändern des Schaltrohres (13) anliegen, während das eine Dichtelement (8, 9) mit seiner außenliegenden umlaufenden Dichtfläche (18, 19) die benachbarte, den Fluiddurchlass umgrenzende Gegendichtfläche (22, 23) beaufschlagt und das andere Dichtelement (9, 8) von der ihm zugeordneten, einen Fluiddurchlass (21, 20) umgrenzenden Gegendichtfläche (25, 24) beabstandet ist.

2. Umstellventil nach Anspruch 1, **dadurch gekennzeichnet, dass** einer ersten Auslassöffnung (4) in Richtung des zu ihr führenden Strömungsweges ein erster axialer Fluiddurchlass vorgeschaltet ist und dass die anderen Öffnungen (3, 5, 6) am Gehäuseumfang des Ventilgehäuses (2) vorgesehen sind.

3. Umstellventil nach Anspruch 1 oder 2, **dadurch gekennzeichnet, dass** der zweite axiale Fluiddurchlass (21) einer am Gehäuseumfang vorgesehenen und in einer quer zur Umstellachse (7) angeordneten Ebene befindlichen Auslassöffnung (6) in Richtung des zu ihr führenden Strömungsweges vorgeschaltet ist.

4. Umstellventil nach einem der Ansprüche 1 bis 3, **dadurch gekennzeichnet, dass** die zumindest eine, vorzugsweise radiale Schaltrohröffnung (16) des Schaltrohres (13) einer dritten Auslassöffnung (5) in Richtung des zu ihr führenden Strömungsweges vorgeschaltet ist.

5. Umstellventil nach einem der Ansprüche 1 bis 4, **dadurch gekennzeichnet, dass** zumindest das eine Achsende der Umstellachse (7) durch einen Gehäusedurchlass hindurch nach außen vorsteht und als eine vorzugsweise zur manuellen Betätigung bestimmte Handhabe ausgestaltet ist.

6. Umstellventil nach einem der Ansprüche 1 bis 5, **dadurch gekennzeichnet, dass** zumindest ein Mitnehmer (10, 11) zumindest in axialer Richtung unverrückbar mit der Umstellachse (7) verbunden ist.

7. Umstellventil nach einem der Ansprüche 1 bis 6, **dadurch gekennzeichnet, dass** zumindest ein Dichtelement (8, 9) mit dem benachbarten Mitnehmer (10, 11) lösbar verbindbar ist.

8. Umstellventil nach einem der Ansprüche 1 bis 7, **dadurch gekennzeichnet, dass** zumindest ein Dichtelement (8, 9) auf seiner, dem benachbarten Mitnehmer (10, 11) zugewandten Stirnseite eine Aufnahme zur saugnapfartigen Verbindung und/oder mechanischen Verrastung zumindest mit einem benachbarten Teilbereich des Mitnehmers (10, 11) aufweist.

9. Umstellventil nach einem der Ansprüche 1 bis 8, **dadurch gekennzeichnet, dass** das wenigstens eine Druckelement (12) als Federwendel ausgestaltet ist, welche die Umstellachse (7) verschiebbar umgreift.

10. Umstellventil nach einem der Ansprüche 1 bis 9, **dadurch gekennzeichnet, dass** das wenigstens eine Druckelement (12) bei atmosphärischem Innendruck im Ventilgehäuse (2) ein Dichtelement (8, 9) von einer am Umfangsstirnrand des Schaltrohres (13) anliegenden Stellposition in einer am benachbarten axialen Fluiddurchlass (20, 21) anliegenden Ausgangsposition bewegt, derart, dass während des nachfolgenden Entnahmevorganges das Fluid durch die dadurch freigelegte Stirnöffnung des Schaltrohres hindurch in das Schaltrohr (13) einfließen und von dort aus diesen durch dessen zumindest eine Schaltrohröffnung (16) ausströmen kann.

## Claims

1. Changeover valve (1) having a valve housing (2) which has at least one inlet orifice (3, 3') and at least three outlet orifices (4, 5, 6), of which (4, 5, 6) in each case one outlet orifice can be selectively assigned to the at least one inlet orifice (3, 3') by means of a changeover shaft (7) guided displaceably in the valve housing (2), having two sealing elements (8, 9), which (8, 9) are guided displaceably on the changeover shaft (7) between two drivers (10, 11) and are held spaced apart from one another by means of at least one thrust element (12), having a switching tube (13) which is guided displaceably in the valve housing (2) by means of two encircling guide ring surfaces (14, 15) provided on the tube circumference thereof and which has at least one radial switching tube orifice (16) provided between the guide ring surfaces (14, 15), **characterized in that** an axial setting movement of the changeover shaft (7) can be transmitted at least to one of the two sealing elements (8, 9) such that either both sealing elements (8, 9) bear with outer encircling sealing surfaces (18, 19) against counterpart sealing surfaces (22, 23), which border a fluid passage (20, 21), of the valve housing (2) and one of the sealing elements (8, 9), by means of an inner encircling sealing surface (24, 25), closes off the adjacent circumferential face edge of the switching tube (13) while the other sealing element (9, 8) remains spaced apart from the other circumferential face edge, which serves as a fluid passage, of the switching tube (13), or else both inner encircling sealing surfaces (24, 25) of the sealing elements (8, 9) bear against the adjacent circumferential edges of the switching tube (13) while one sealing element (8, 9), by means of its outer encircling sealing surface (18, 19), acts on the adjacent counterpart sealing surface (22, 23) which borders the fluid passage and the other sealing element (9, 8) is spaced apart from the counterpart sealing surface (25, 24) which is assigned thereto and which borders a fluid passage (21, 20).

2. Changeover valve according to Claim 1, **characterized in that** a first axial fluid passage is positioned upstream of a first outlet orifice (4) with respect to the direction of the flow path leading thereto, and **in that** the other orifices (3, 5, 6) are provided on the housing circumference of the valve housing (2).

3. Changeover valve according to Claim 1 or 2, **characterized in that** the second axial fluid passage (21) is positioned upstream of an outlet orifice (6), which is provided on the housing circumference and which is situated in a plane arranged transversely with respect to the changeover shaft (7), with respect to the direction of the flow path leading thereto.

4. Changeover valve according to one of Claims 1 to 3, **characterized in that** the at least one, preferably radial switching tube orifice (16) of the switching tube (13) is positioned upstream of a third outlet orifice (5) with respect to the direction of the flow path leading thereto.

5. Changeover valve according to one of Claims 1 to 4, **characterized in that** at least one shaft end of the changeover shaft (7) projects outward through a housing passage and is designed as a handle intended preferably for manual actuation.

6. Changeover valve according to one of Claims 1 to 5, **characterized in that** at least one driver (10, 11) is connected, immovably at least in the axial direction, to the changeover shaft (7).

7. Changeover valve according to one of Claims 1 to 6, **characterized in that** at least one sealing element (8, 9) can be detachably connected to the adjacent driver (10, 11).

8. Changeover valve according to one of Claims 1 to 7, **characterized in that** at least one sealing element (8, 9) has, on its face side facing toward the adjacent driver (10, 11), a receptacle for a suction-cup-like connection and/or mechanical latching at least to an adjacent subregion of the driver (10, 11).

9. Changeover valve according to one of Claims 1 to 8, **characterized in that** the at least one thrust element (12) is designed as a spring coil which extends in a displaceable manner around the changeover shaft (7).

10. Changeover valve according to one of Claims 1 to 9, **characterized in that**, when atmospheric internal pressure prevails in the valve housing (2), the at least one thrust element (12) moves a sealing element (8, 9) from a setting position, in which it bears against the circumferential face edge of the switching tube (13), into an initial position, in which it bears against the adjacent axial fluid passage (20, 21), in such a way that, during the subsequent extraction process, the fluid can flow into the switching tube (13) through the thereby exposed face orifice of the switching tube, and from there, can flow out of said switching tube through the at least one switching tube orifice (16) of said switching tube.

## Revendications

1. Inverseur (1) comprenant un carter (2) muni d'au moins un orifice d'admission (3, 3') et d'au moins trois orifices de sortie (4, 5, 6) au sein desquels (4, 5, 6) un orifice respectif de sortie peut être sélectivement assigné audit orifice d'admission (3, 3') à présence minimale, au moyen d'un axe d'inversion (7) guidé à coulissement dans le carter (2) dudit inverseur ; deux éléments d'étanchement (8, 9), lesquels (8, 9) sont guidés à coulissement sur ledit axe d'inversion (7), entre deux organes d'entraînement (10, 11), et sont maintenus à distance l'un de l'autre à l'aide d'au moins un élément de pression (12) ; et une tubulure de commutation (13) qui est guidée à coulissement dans ledit carter (2) de l'inverseur, par l'intermédiaire de deux surfaces annulaires périphériques de guidage (14, 15) prévues sur son pourtour tubulaire, et est dotée d'au moins une ouverture radiale (16) prévue entre lesdites surfaces annulaires de guidage (14, 15), **caractérisé par le fait qu'**un mouvement axial de réglage de l'axe d'inversion (7) peut être au moins répercuté sur l'un des deux éléments d'étanchement (8, 9), de façon telle que lesdits deux éléments d'étanchement (8, 9) soient en applique, par des surfaces périphériques d'étanchement (18, 19) situées à l'extérieur, contre des surfaces complémentaires d'étanchement (22, 23) du carter (2) de l'inverseur qui délimitent la périphérie d'un passage (20, 21) de circulation de fluide, et que l'un desdits éléments d'étanchement (8, 9) obture, par une surface périphérique d'étanchement (24, 25) située à l'intérieur, le bord périphérique frontal de la tubulure de commutation (13) qui occupe une position voisine, tandis que l'autre élément d'étanchement (8, 9) demeure à distance de l'autre bord périphérique frontal de ladite tubulure de commutation (13), qui procure un passage de circulation du fluide ; ou bien que les deux surfaces périphériques d'étanchement (24, 25), situées à l'intérieur sur les éléments d'étanchement (8, 9), soient en applique contre les bords périphériques de la tubulure de commutation (13) qui occupent des positions voisines, tandis que l'un (8, 9) desdits éléments d'étanchement sollicite, par sa surface périphérique d'étanchement (18, 19) située à l'extérieur, la surface complémentaire d'étanchement (22, 23) qui délimite la périphérie du passage de circulation du fluide et occupe une position voisine, et l'autre élément d'étanchement (9, 8) se trouve à distance de la surface complémentaire d'étanchement (25, 24) qui lui est assignée et qui délimite la périphérie d'un passage (21, 20) de circulation de fluide.

2. Inverseur selon la revendication 1, **caractérisé par le fait qu'**un premier passage axial de circulation de fluide est ménagé en amont d'un premier orifice de sortie (4), dans la direction du trajet d'écoulement menant à ce dernier ; et **par le fait que** les autres orifices (3, 5, 6) sont prévus sur le pourtour du carter (2) dudit inverseur.

3. Inverseur selon la revendication 1 ou 2, **caractérisé par le fait que** le second passage axial (21) de circulation de fluide est ménagé en amont d'un orifice de sortie (6) prévu sur le pourtour du carter et pratiqué dans un plan situé perpendiculairement à l'axe d'inversion (7), dans la direction du trajet d'écoulement menant audit orifice.

4. Inverseur selon l'une des revendications 1 à 3, **caractérisé par le fait que** l'ouverture (16) de préférence radiale, à présence minimale sur la tubulure de commutation (13), est disposée en amont d'un troisième orifice de sortie (5) dans la direction du trajet d'écoulement menant à ce dernier.

5. Inverseur selon l'une des revendications 1 à 4, **caractérisé par le fait qu'**au moins l'une des extrémités de l'axe d'inversion (7) fait saillie vers l'extérieur en empruntant une traversée pratiquée dans le carter, et est configurée en une poignée destinée, de préférence, à l'actionnement manuel.

6. Inverseur selon l'une des revendications 1 à 5, **caractérisé par le fait qu'**au moins un organe d'entraînement (10, 11) est relié à l'axe d'inversion (7) avec immobilisation, au moins dans le sens axial.

7. Inverseur selon l'une des revendications 1 à 6, **caractérisé par le fait qu'**au moins un élément d'étanchement (8, 9) peut être relié, de manière libérable, à l'organe d'entraînement (10, 11) occupant une position voisine.

8. Inverseur selon l'une des revendications 1 à 7, **caractérisé par le fait qu'**au moins un élément d'étanchement (8, 9) présente, sur sa face extrême tournée vers l'organe d'entraînement (10, 11) occupant une position voisine, un logement affecté à la liaison de type ventouse et/ou à l'encliquetage mécanique avec au moins une région partielle dudit organe d'entraînement (10, 11), qui occupe une position voisine.

9. Inverseur selon l'une des revendications 1 à 8, **caractérisé par le fait que** l'élément de pression (12), à présence minimale, est configuré en une pièce hélicoïdale élastique ceinturant l'axe d'inversion (7) avec faculté de coulissement.

10. Inverseur selon l'une des revendications 1 à 9, **caractérisé par le fait que**, lorsqu'une pression atmosphérique règne à l'intérieur du carter (2) dudit inverseur, l'élément de pression (12) à présence minimale imprime un mouvement à un élément d'étanchement (8, 9), depuis un emplacement de réglage en applique contre le bord périphérique frontal de la tubulure de commutation (13), jusqu'à un emplacement de départ en applique contre le passage axial (20, 21) de circulation du fluide qui occupe une position voisine, de telle sorte que, lors du processus de soutirage subséquent, ledit fluide puisse affluer dans la tubulure de commutation (13) en empruntant l'ouverture frontale de ladite tubulure de commutation, ainsi dégagée, et puisse sortir de ladite tubulure en empruntant l'ouverture (16) à présence minimale sur cette dernière.
